Europäisches Patentamt

European Patent Office

Office européen des brevets

(11) Veröffentlichungsnummer: **0 189 825 B1**

# EUROPÄISCHE PATENTSCHRIFT

(45) Veröffentlichungstag der Patentschrift: **25.03.92**

(51) Int. Cl.⁵: **G01L 1/12**, G01L 9/16, G01L 1/22, G01B 7/24

(21) Anmeldenummer: **86100741.7**

(22) Anmeldetag: **21.01.86**

(54) **Dehnungsaufnehmer.**

(30) Priorität: **23.01.85 DE 3502008**

(43) Veröffentlichungstag der Anmeldung:
**06.08.86 Patentblatt 86/32**

(45) Bekanntmachung des Hinweises auf die
Patenterteilung:
**25.03.92 Patentblatt 92/13**

(84) Benannte Vertragsstaaten:
**AT CH DE FR GB IT LI SE**

(56) Entgegenhaltungen:
**EP-A- 0 046 381**
**EP-A- 0 107 082**
**DE-B- 2 316 344**
**GB-A- 2 151 793**
**US-A- 3 943 481**

**PHYSICAL REVIEW B, Band 31, Nr. 4, 15.
Februar 1985, Seiten 2033-2039; R. ROY et al.:
"Electrical and galvanomagnetic properties
of Fe100-xBx metallic glasses (13 x 26)"**

**J. APPL. PHYS., Band 57, Nr. 1, 15. April 1985,
Seiten 3831; H. HOFFMANN:
"Galvano-magnetic thin film sensors"**

(73) Patentinhaber: **ALCATEL N.V.
Strawinskylaan 537 (World Trade Center)
NL-1077 XX Amsterdam(NL)**

(84) Benannte Vertragsstaaten:
**CH FR GB IT LI SE AT**

(73) Patentinhaber: **Standard Elektrik Lorenz Aktiengesellschaft
Lorenzstrasse 10
W-7000 Stuttgart 40(DE)**

(84) Benannte Vertragsstaaten:
**DE**

(72) Erfinder: **Hoffmann, Horst, Prof. Dr.
Ahornstrasse 7
W-8401 Pentling(DE)**
Erfinder: **Kersten, Peter, Dr.
Neuköllner Strasse 8
W-7250 Leonberg(DE)**
Erfinder: **Volz, Hans, Dr.
Liegnitzer Strasse 4
W-7141 Schwieberdingen(DE)**
Erfinder: **Seyfried, Ulrich
Mähdachstrasse 56
W-7000 Stuttgart 31(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 189 825 B1

RADIO, FERNSEHEN, ELEKTRONIK, Band 34, Nr. 5, Mai 1985, Seiten 316-319; U. LOREIT et al.: "Magnetoresistive Sensoren in der Mess- und Speichertechnik"

J. APPL. PHYS., Band 52, Nr. 3, März 1981, Seiten 2468-2470, J.H. FLUITMAN: "Applicability of the planar Hall effect"

PATENT ABSTRACTS OF JAPAN, Band 9, Nr. 39 (E-297)(1762); & JP-A-59 181 575

PATENT ABSTRACTS OF JAPAN, Band 8, Nr. 165 (P-291)(1602); & JP-A-59 61732

JPN. J. APPL. PHYS., Band 18, Nr. 12, 1979, Seiten 2305, 2306; T. OKADA et al.: "Amorphous Fe-Co-Si-B Sputtered Thin Films"

IEEE TRANSACTIONS ON MAGNETICS, Band MAG-16, Nr. 5, September 1980, Seiten 905, 906; T.R. McGUIRE et al.: "Galvanomagnetic properties of transition Metal-Boron Films"

SIEMENS FORSCHUNGS- UND ENTWICK-LUNGSBERICHTE, Band 10, Nr. 2, 1981, Seiten 83-90, Würzburg, DE; R. BOLL et al.: "Magnetic Sensors of New Materials"

(74) Vertreter: **Pohl, Herbert, Dipl.-Ing et al Standard Elektrik Lorenz AG Patent- und Lizenzwesen Postfach 30 09 29 W-7000 Stuttgart 30(DE)**

## Beschreibung

Die Erfindung betrifft einen Dehnungsaufnehmer nach dem Oberbegriff des Anspruchs 1.

Derartige Dehnungsaufnehmer finden ihre Anwendung als Sensoren zur Messung von Kraft, Weg, Gewicht, Beschleunigung, Druck, Drehmomenten oder mechanischen Spannungen.

Es ist aus der DE-A 23 16 344 ein Verfahren zum Messen einer mechanischen Spannung in einer magnetischen Schicht durch Messen der Magnetostriktionsänderung bekannt. Die magnetische Schicht befindet sich durch eine nicht magnetische Schicht getrennt auf einer magnetischen Welle. Der magnetische Fluß in der magnetischen Schicht wird durch eine Magnetisierungsspule erzeugt und die Änderung der Magnetisierung durch eine Detektionsspule gemessen. Im einleitenden Teil der Beschreibung wird es als nachteilig angegeben, die magnetostriktive Schicht als ferromagnetische anisotrope Schicht auszubilden.

Dieses Verfahren weist den Nachteil auf, daß durch zwei zusätzliche Spulen, eine Magnetisierungsspule zur Erzeugung des Magnetfeldes und eine Detektionsspule zur Bestimmung des magnetischen Flusses, erforderlich sind.

Aus der Druckschrift EP-A-0046381 ist eine Vorrichtung zur Messung der mechanischen Spannung bekannt, bei der eine mechanische Spannung auf ein magnetisches, ein einen hohen magnetostriktiven Effekt aufweisendes Material übertragen und dort induktiv gemessen wird. Dasbei ist das magnetische Material als selbsttragende Feder ausgebildet.

Nachteilig an dieser Ausführung ist, daß die Messung ebenfalls, wie bei der DE-A-23 16 344, über eine Detektionsspule induktiv gemessen wird.

Aus den PATENT ABSTRACTS OF JAPAN Band 9, Nr. 39 (E-297)(1762) (Toshiba K.K.) Ist ein funktionell nicht näher beschriebener Drehmomentsensor bekannt, der aus magnetisch anisotropem, ferromagnetischem, magnetostriktivem Material besteht. Es ist dabei nicht nähers erläutert, wie das Drehmoment letztendlich gemessen wird.

Aus dem PATENT ABSTRACT OF JAPAN Band 8, Nr. 165 (P-291)(1602) (Toshiba K.K.) Ist ein Drehmomentsensor bekannt, bei dem auf einer Welle eine dünne magnetisch anisotrope magnetostriktive Legierungsschicht mit eingeprägter Magnetisierung aufgebracht ist. Das Anliegen eines Drehmoments erzeugt in der Legierungsschicht eine Veränderung der magnetischen Eigenschaften, die wiederum über die Magnetostriktion eine Änderung der Leitfähigkeit hervorrufen. Diese Änderung der elektrischen Leitfähigkeit wird berührungslos elektrisch gemessen.

Die Dokumente J. APPL. PHYS. Band 52, Nr. 3, März 1981, Seiten 2468 bis 2470, J H. Fluitmann: "Applicability of the planar Hall effect" und IEEE TRANSACTIONS ON MAGNETICS Band MAG - 16, Nr. 5, September 1980, Seiten 905, 906, T.R. McGuire et al.: "Galvanomagnetic properties of transition Metal-Boron Films" erläutern verschiedene Möglichkeiten der Untersuchung des Hall-Effekts in magnetisch anisotropen Materialien offenbaren verschiedene Materialien, die galvanomagnetische Effekte zeigen und beinhalten die Ausbildung entsprechender Aufnehmer als Film und in Form von Streifen. In den Dokumenten ist kein Bezug zu den gattungsgemäßen Dehnungsaufnehmern vorhanden.

Der Erfindung liegt die Aufgabe zugrunde, einen Dehnungsaufnehmer zu schaffen, der eine hohe Empfindlichkeit aufweist, vielseitig verwendbar und einfach herstellbar ist.

Die Aufgabe wird erfindungsgemäß durch einen Dehnungsaufnehmer gemäß Anspruch 1 gelöst.

Vorteilhafte Ausgestaltungen der Erfindung sind den abhängigen Ansprüchen zu entnehmen.

Die Herstellung des Dehnungsaufnehmers erfolgt durch Aufdampfen oder Aufstäuben des Materials. Die Mischung macht es dabei erforderlich, daß beide Komponenten entsprechend ihrem Anteil aufgebracht werden. Die Schicht wird auf ein Substrat aufgebracht und danach die gewünschte Form der Fläche lithographisch geätzt. Die Ausmaße der Schicht liegen bei einer Länge von 3 mm, einer Breite von 1 mm und einer Schichtdicke zwischen 10 bis 100 nm.

Zur Einprägung der magnetischen Anisotropie wird die Schicht bei $T = 300°C$ getempert, dabei liegt ein Magnetfeld H an, dessen Richtung z.B. parallel zur Fläche verläuft und eine Feldstärke von $H \geq 4{,}8 \cdot 10^3 A/m$ (60 Oe) aufweist. Der Vorgang dauert vier Stunden. Die derart eingeprägte Richtung der Magnetisierung ist die energetisch günstigste Richtung und die Magnetisierung wird bei Zimmertemperatur nach einer Auslenkung immer wieder in diese günstigste Richtung zurückfallen. Diese Richtung wird auch "leichte Richtung" genannt.

Der Dehnungsaufnehmer ist umso empfindlicher, je kleiner die magnetische Anisotropie der Schicht ist. Die Anisotropie wird verkleinert, indem nochmals vier Stunden bei $T = 300°C$ mit $H \geq 4{,}8 \cdot 10^3 A/m$ (60 Oe) getempert wird, wobei das Magnetfeld in der Ebene der Schicht rotiert.

Die Funktion des Dehnungsaufnehmers liegt im Zusammenwirken mehrerer physikalischer Eigenschaften. Die Magnetisierung bewirkt eine Anisotropie der Leitfähigkeit. Das magnetostriktive Verhalten hat eine Änderung der Magnetisierungsrichtung zufolge, wenn der Dehnungsaufnehmer eine Dehnung und/oder Kompression erfährt. Proportional zur mechanischen Beanspruchung ändert die Magnetisierung ihre Richtung bis zu 90°. Der Dehnungsmeßbereich ist dabei durch die Anisotropiefeldstärke $H_k$ bestimmt. $H_k$ hängt wiederum vom verwendeten Material und der magnetischen Vorbehandlung ab. Da sich die Achse der Anisotropie der Leitfähigkeit mit der Magnetisierung dreht, verändert sich der elektrische Widerstand zwischen zwei Punkten, deren Verbindungsgerade in der Drehebette liegt, ebenfalls proportional zur mechanischen Beanspruchung. Eine Dehnung oder Stauchung kann somit aufgrund der Magnetostriktion, die einen ersten galvanomagnetischen Effekt darstellt, als Änderung der elektrischen Leitfähigkeit gemessen werden.

Als zweiter galvanomagnetischer Effekt wird der planare Hall-Effekt zur Bestimmung der Dehnung herangezogen. Hierfür wird eine andere Anordnung des Dehnungsaufnehmers so gewählt, daß durch die dünne Schicht wie beim normalen Hall-Effekt ein Treibstrom fließt. Genauso ist ein Magnetfeld notwendig, um die Ladungsträger aufgrund der auftretenden Lorentzkraft von ihrer ursprünglichen Richtung abzubringen. Der Treibstrom fließt in einer Richtung. Die Komponente eines Magnetfeldes, die senkrecht zur Stromrichtung steht, bewirkt nun die Ablenkung der Ladungsträger in die dritte Richtung, die senkrecht zu den beiden anderen steht.

In dieser dritten Richtung wird die Hall-Spannung abgegriffen. Dabei muß aber bei der verwendeten Technik der bandförmige Dehnungsmeßstreifen über eine Seitenfläche mit dem Substrat verbunden sein. Beim erfindungsgemäßen Dehnungsaufnehmer wird der planare Hall-Effekt ausgenützt, was die Verbindung der großen Streifenfläche mit dem Substrat ermöglicht. Konkret bedeutet dies, daß der Treibstrom in der Ebene der dünnen Schicht fließt und daß oie Magnetisierung ebenfalls in der Ebene liegt. Im nicht gedehnten Zustand liegen Magnetisierung und Treibstrom parallel. Es gibt somit keine magnetische Komponente senkrecht zum Treibstrom und somit auch keinen Hall-Effekt (weder planar noch normal). Dreht sich die Magnetisierung, entsteht eine Komponente und es tritt somit Hall-Spannung auf. Die planare Hall-Spannung wird senkrecht zur Treibstromrichtung in der Ebene, die von Treibstrom und Magnetisierung aufgespannt wird, gemessen.

Die Erfindung wird im folgenden anhand von durch Figuren veranschaulichten Ausführungsbeispielen näher erläutert. Es zeigen

Fig. 1a     eine Anordnung eines einfachen Dehnungsaufnehmers in der Draufsicht,

Fig. 1b     die gemäß Fig. 1a dargestellte Anordnung in einer Seitenansicht,

Fig. 2a     einen doppelbeschichteten Dehnungsaufnehmer in der Draufsicht,

Fig. 2b     die gemäß Fig. 2a dargestellte Anordnung in einer Schnittzeichnung,

Fig. 3a     einen durch ein mangetisches Wechselfeld modulierten Dehnungsaufnehmer,

Fig. 3b     die gemäß Fig. 3a dargestellte Anordnung in einer Schnittzeichnung,

Fig. 4     die Anordnung eines Dehnungsaufnehmers, bei dem die planare Hall-Spannung abgegriffen wird,

Fig. 5     die Anordnung eines Dehnungsaufnehmers, bei dem die planare Hall-Spannung abgegriffen und mit einem magnetischen Wechselfeld moduliert wird,

Fig. 6     einen Dehnungsaufnehmer in der Anwendung eines Druckmessers und

Fig. 7     eine Brückenschaltung zur Temperaturkompensation.

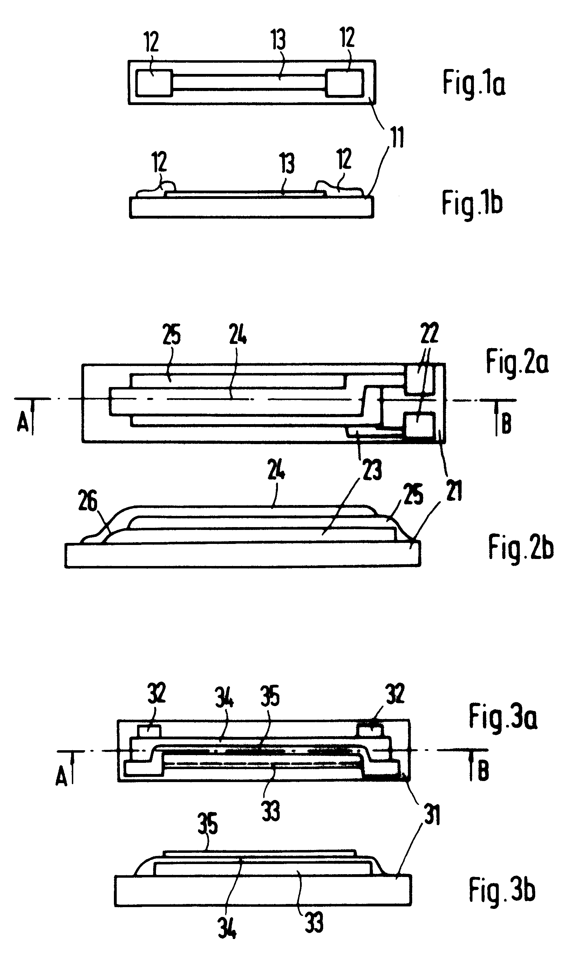

In Fig. 1 ist eine amorphe Metallschicht 13, die aus $FE_{80}B_{20}$ besteht, als Dehnungsmeßstreifen auf ein Substrat 11 aufgebracht. Die leichte Richtung liegt in der Ebene der Streifenfläche und senkrecht zur Längsachse. Die beiden Kontakte 12 sind so an den Enden des Streifens 13 angebracht, daß sie jeweils die Stirnseiten des Streifens bedecken; zusätzlich haften die Kontakte noch auf dem Substrat 11. Sie bestehen aus einer Legierung von CrAu oder CoFeB und sind aufgedampft oder aufgestäubt Die Änderung der elektrischen Leitfähigkeit zwischen den beiden Kontakten ist das Maß für die Dehnung. Die Leitfähigkeit wird electrisch gemessen. Diese Ausführung eignet sich besonders zur digitalen Anzeige der Dehnung. Es besteht hierbei die Gefahr, daß sich zwei benachbarte Domänen magnetisch kurzschließen, und daß sich dabei Teile der Domänen, auch ohne Dehnung, aus der leichten Richtung drehen.

Um die Domänenausbildung vollständig unter Kontrolle zu bringen, wird der Dehnungsmesser (Fig. 2a, 2b) als Doppelschicht aufgebaut. Die beiden FeB-Streifen 23, 24 sind so durch eine $SiO_2$-Schicht 25 getrennt, daß sich die Streifen an einem Ende 26 miteinander Kontakt haben. Die Kontakte 22 sind jeweils am anderen Ende des Streifens, wie in Fig. 2a dargestellt angebracht. Es ist dabei notwendig, die Streifenform nach Abb. 2a zu verändern. Die Schichten werden nacheinander aufgedampft oder aufgestäubt. Diese Anordnung bewirkt, daß in jedem Streifen nur eine Domäne gebildet wird. Die leichte Richtung liegt dabei jeweils senkrecht zur Längsachse des Streifens, die Domänen der beiden Streifen liegen antiparallel. Die Dehnung wird wie im in Fig. 1a, 1b dargestellten Ausführungsbeispiel über die Gleichstromleitfähigkeit gemessen.

Bei den obengenannten Ausführungsbeispielen zeigt das Meßsignal zwischen Dehnung und Kompression noch eine Hysterese. Um diese zu unterdrücken, wird die Magnetisierung mit einem externen elektromagnetischen Wechselfeld der Frequenz $\nu$ überlagert, dessen H-Komponente senkrecht zur leichten Richtung steht. Die Magnetisierung oszilliert somit mit der Frequenz $\nu$ um die jeweilige Ruhelage, die durch Dehnung bestimmt wird. Die maximale Frequenz liegt im MHz-Bereich. Die elektrische Leitfähigkeit oszilliert nun, mit der Frequenz $\nu$ oder $2\nu$, oder einer Kombination beider Frequenzen, um eine mittlere Leitfähigkeit. Die gemessene Leitfähigkeit hängt von der Ruhelage der Magnetisierung und der Amplitude des externen Wechselfeldes ab. Das Maß für die Dehnung ist die Differenz zwischen maximaler und minimaler Amplitude der Leitfähigkeit.

Die entsprechende Anordnung ist in Fig. 3a, 3b dargestellt. Auf das Substrat 31 ist die amorphe Schicht 33 als Streifen aufgebracht. Die leichte Richtung liegt parallel zur Längsachse des Streifens. An den Enden sind die Kontakte 32 angebracht. Darüber liegt eine Isolationsschicht 34 aus $SiO_2$, die Kontakte bleiben frei. Über der Isolationsschicht 34 befindet sich eine streifenförmige Schicht 35 aus CrAu oder Al, deren Richtung parallel zum FeB-Streifen 33 verläuft. Die hier angelegte Wechselspannung sorgt für das magnetische Wechselfeld.

Die zu erfassende Dehnung muß nicht parallel zur Längsachse des Streifens erfolgen, sie muß nur über den Dehnungsstreifen übertragen werden. Da das Signal periodisch schwankt, kann Gleich- und Wechselspannungsanteil elektronisch getrennt und das relevante Signal als reines Wechselspannungssignal weiterverarbeitet werden.

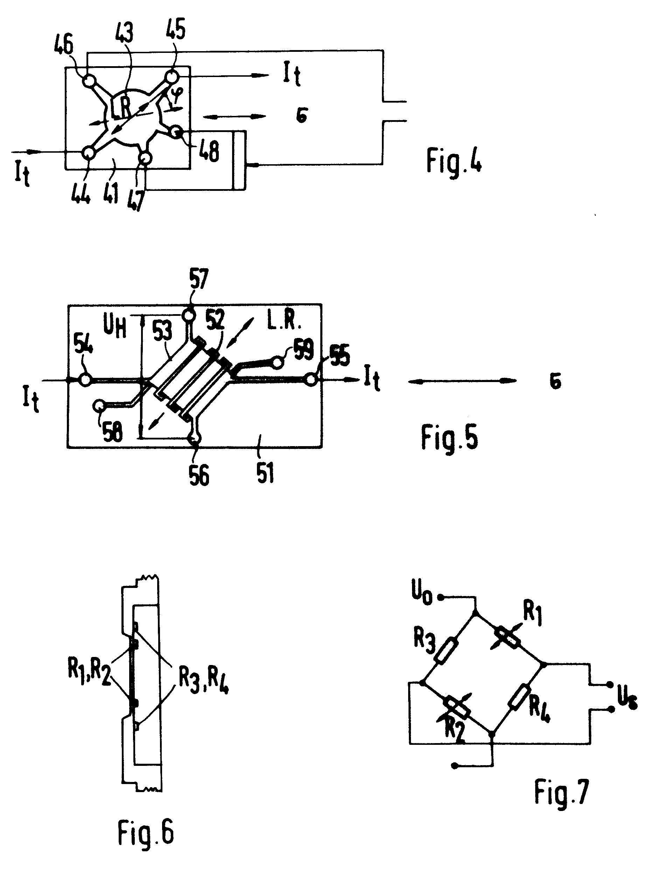

Den folgenden beiden Ausführungsbeispielen (Fig. 4, 5) liegt die Anwendung des planaren Hall-Effekts zugrunde. In Fig. 4 ist ein kreisförmiger Dehnungsaufnehmer 43 auf das Substrat 41 aufgebracht, wobei am Dehnungsaufnehmer fünf Kontakte 44 bis 48 anliegen. Zwischen den Kontakten 44 und 45 fließt der Treibstrom $I_t$. Zwischen den Kontakten 46 und 47 mit 48 wird die planare Hall-Spannung abgegriffen, dabei wird über die Kontakte 47 und 48 der Spannunggsabfall entlang der Treibstromrichtung abgegriffen und kann somit bei der Bestimmung der Hall-Spannung berücksichtigt werden. Die leichte Richtung L.R. verläuft im ungedehnten Zustand parallel zum Treibstrom $I_t$. Günstigerweise bilden die mechanische Spannung und die Flußrichtung $I_t$ im ungedehnten Zustand einen Winkel von $\rho = 45°$. Mit $U_H \sim \sin 2\rho$ bedeutet dies auf jeden Fall eine Spannungsabnahme bei Dehnung, ausgehend von einer maximalen Hall-Spannung.

Die Dehnung läßt sich bei konstantem Treibstrom $I_t$ direkt als Spannung ablesen.

Eine überlagerung der Magnetisierung mit einem elektromagnetischen Wechselfeld, wie sie bei der Anwendung der Magnetoresistenz in den Ausführungsbeispielen in Fig. 2 zu Fig. 3 vorgesehen ist, ist bei der Anwendung des planaren Effekts ebenfalls möglich (Fig. 5). Dabei geht zusätzlich noch das Vorzeichen der Magnetisierung in das Meßergebnis ein, d.h. es liegt eine Wechselspannung als Hall-Spannung an. (Bei der Magnetoresistenz muß das reine Wechselspannungssignal erst durch elektronische Trennung des periodisch schwankenden Gleichspannungssignales erzeugt werden.) Die Hall-Spannung oszilliert wie beim Ausführungsbeispiel von Fig. 3a, 3b mit der Frequenz des Wechselfeldes $\nu$ oder mit $2\nu$ oder einer überlagerung beider Frequenzen. Das Maß für die Dehnung ist die Amplitude der Hall-Spannung, die sich proportional zur Dehnung ändert. Der Dehnungsaufnehmer besteht aus einer Hall-Sonde (Fig. 5); dabei ist die amorphe Schicht als quadratisches Blättchen 53 auf ein Substrat 51 aufgedampft. An den Ecken sind vier elektrische Kontakte 54 bis 57 angebracht. Der Treibstrom $I_t$ fließt zwischen den Kontakten 54 und 55 und zwischen den Kontakten 56 und 57 wird die planare Hall-Spannung abgegriffen. Die leichte Richtung L.R. und die Flußrichtung des Treibstromes $I_t$ schließen im ungedehnten Zustand einen Winkel $\phi = 45°$ ein. Die leichte Richtung L.R. bildet mit der Dehnungsrichtung ebenfalls einen Winkel von $45°$ und liegt in der Ebene des Blättchens. Das elektromagnetische Wechselfeld wird in einer flachen Spule 52 erzeugt, deren Windungen parallel zur leichten Richtung verlaufen. Die elektrische Wechselspannung wird an den Kontakten 58 und 59 der Spule 52 angelegt.

In Fig. 6 sind zwei erfindungsgemäße Dehnungsaufnehmer $R_1$, $R_2$ auf einer Membran zur Druckmessung angebracht. Die Dehnungsaufnehmer $R_3$ und $R_4$ unterliegen keiner Dehnung, sondern sie dienen bei Verwendung in einer Brückenschaltung gemäß Fig. 7 der Temperaturkompensation. Dabei stellt $U_o$ die angelegte Spannung, und $U_s$ das Meßsignal dar.

Der erfindungsgemäße Dehnungsaufnehmer muß natürlich nicht aus einer amorphen Bor-Eisen-Legierung (positiver Magnetostriktionkoeffizient) bestehen. Besonders interessant ist das amorphe Metall der Zusammensetzung Nickel-Eisen. Der Magnetostriktions-Koeffizient ändert bei $Ni_{81} Fe_{19}$ - (Atomprozent) sein Vorzeichen, was weitere technische Ausführungen ermöglicht. Die amorphen Metalle zeigen die niedrigsten Koerzitivfeldstärken, die sich durch Legierungen mit den Metalloiden (B, C, Si, Ge, P), Zirkon oder Niob variieren lassen.

Trotzdem können auch ubergangsmetalle der Eisengruppe oder einer Legierung, bestehend aus ubergangsmetallen der Eisengruppe verwendet werden. Diese zeigen aber gegenüber den amorphen Metallen eine hohe Koerzitivfeldstärke und somit eine breite Hysterese des Meßsignals.

**Patentansprüche**

1. Dehnungsaufnehmer, welcher eine auf eine Unterlage aufgebrachte und aus einem magnetostriktiven ferromagnetischen Material bestehende dünne Schicht (13, 23, 24, 33, 43, 53) aufweist, deren Magnetisierung sich aufgrund der magnetostriktiven Eigenschaft des Materials infolge einer Längenänderung ändert, **dadurch gekennzeichnet,**
   - daß die dünne Schicht (13, 23, 24, 33, 43, 53) magnetisch anisotrop ist,
   - daß die magnetische Anisotropie eine Vorzugsrichtung (LR) aufweist, zu der die Magnetisierung im ungedehnten Zustand parallel liegt und sich die Richtung der Magnetisierung durch eine Längenänderung in der Ebene der dünnen Schicht (13, 23, 24, 33, 43, 53) dreht, und
   - daß wenigstens zwei mit der dünnen Schicht (13, 23, 24, 33, 43, 53) verbundene elektrische Kontakte (12, 22, 32, 44, 45, 46, 47, 48, 54, 55, 56, 57), die vorzugsweise an sich gegenüberliegenden Seiten der dünnen Schicht (13, 23, 24, 33, 43, 53) zur Messung einer infolge des galvanomagnetischen Effekts auftretenden Spannungswertes angebracht sind.

2. Dehnungsaufnehmer nach Anspruch 1, dadurch gekennzeichnet, daß der Dehnungsaufnehmer unter Ausnutzung der Magnetoresistenz als Dehnungsmeßstreifen (13) ausgebildet ist, und daß die Längsachse des Dehnungsmeßstreifens und die Vorzugsrichtung (L.R.) entweder parallel oder im rechten Winkel gerichtet sind.

3. Dehnungsaufnehmer nach Anspruch 2, dadurch gekennzeichnet, daß zwei Dehnungsmeßstrei£en (23, 24) so durch eine Isolierschicht (25) getrennt gestapelt sind, daß die Dehnungsmeßstrei£en (23, 24) an einem Ende des Stapels (26) miteinander galvanisch verbunden sind, und daß am entgegengesetzten Ende des Stapels jeweils ein elektrischer Kontakt (22) an den Dehnungsmeßstreifen (23, 24) anliegt.

4. Dehnungsaufnehmer nach einem der Ansprüche 1 bis 3, dadurch gekennzeichnet, daß ein elektrischer Leiter (35) durch eine Isolierschicht (34) vom Dehnungsmeßstreifen (33) getrennt, parallel zur magnetischen Vorzugsrichtung angeordnet ist, und daß am elektrischen Leiter (35) eine Wechselspannung mit der Frequenz $\nu$ anliegt, wobei 1Hz < $\nu$ < 100 MHz ist.

5. Dehnungsaufnehmer nach Anspruch 1, dadurch gekennzeichnet, daß der Dehnungsaufnehmer unter Ausnutzung des planaren Hall-Effekts als dünne Schicht (43, 53) ausgebildet ist, deren Fläche zwei etwa gleich groß ausgeprägte Dimensionen, z.B. einen Kreis oder ein Quadrat, aufweist, und daß die Vorzugsrichtung (L.R.) und die Dehnungsrichtung ($\sigma$) vorzugsweise einen Winkel von 45° bilden.

6. Dehnungsaufnehmer nach einem der Ansprüche 1, 2, 3 oder 5, dadurch gekennzeichnet, daß er von einer Flachspule umschlossen ist, deren Wicklung im ungedehnten Zustand parallel zur magentischen Vorzugsrichtung liegt und daß an der Spule eine Wechselspannung mit der Frequenz $\nu$ anliegt, wobei 1Hz < $\nu$ < 100 MHz ist.

7. Dehnungsaufnehmer nach einem der Ansprüche 1 bis 6, dadurch gekennzeichnet, daß das Material ein Übergangsmetall der Eisengruppe ist.

8. Dehnungsaufnehmer nach einem der Ansprüche 1 bis 7, dadurch gekennzeichnet, daß das Material eine Legierung ist, die auf Übergangsmetallen der Eisengruppe basiert.

9. Dehnungsaufnehmer nach einem der Ansprüche 1 bis 8, dadurch gekennzeichnet, daß das Material ein amorphes Metall ist.

10. Dehnungsaufnehmer nach einem der Ansprüche 1 bis 9, dadurch gekennzeichnet, daß das amorphe Metall Metalloide (B, C, Si, Ge, P) enthält.

11. Dehnungsaufnehmer nach einem der Ansprüche 1 bis 10, dadurch gekennzeichnet, daß das amorphe Metall Zirkon, Hafnium und/oder Niob enthält.

12. Dehnungsaufnehmer nach einem der Ansprüche 1 bis 11, dadurch gekennzeichnet, daß das amorphe Metall aus einer Legierung $Ni_xFe_{(100-x)}$ mit 65 ≤ x ≤ 80 Atomprozent und 82 ≤ x ≤ 90 Atomprozent besteht.

13. Dehnungsaufnehmer nach einem der Ansprüche 1 bis 12, dadurch gekennzeichnet, daß das amorphe Metall aus $Fe_zB_{(100-z)}$ mit 60 ≤ z ≤ 90 Atomprozent besteht.

14. Dehnungsaufnehmer nach einem der Ansprüche 1 bis 13, dadurch gekennzeichnet, daß die dünne Schicht eine Dicke von 10 nm bis 100 nm aufweist.

## Claims

1. Strain transducer comprising a thin film (13, 23, 24, 34, 43, 53) of a magnetostrictive, ferromagnetic material which is deposited on a substrate and whose magnetization changes as a result of a change in length because of the magnetostrictive properties of the material, **characterized in**
   - that the thin film (13, 23, 24, 33, 43, 53) is magnetically anisotropic,
   - that the magnetic anisotropy has a preferred direction (LR) which is parallel to the direction of magnetization in the non-strained state, that as a result of a change in length, the direction of magnetization rotates in the plane of the thin film (13, 23, 24, 33, 43, 53), and
   - that at least two electrical contacts (12, 22, 32, 44, 45, 46, 47, 48, 54, 55, 56, 57) connected to the thin film (13, 23, 24, 33, 43, 53) are provided, preferably at opposite sides of the thin film (13, 23, 24, 33, 43, 53), for measuring a voltage value occurring as a result of the galvanomagnetic effect.

2. A strain transducer as claimed in claim 1, characterized in that the strain transducer is designed as a magnetoresistive strain gage (13), and that the longitudinal axis of the strain gage and the preferred direction (L.R.) are either parallel or at right angles to each other.

3. A strain transducer as claimed in claim 2, characterized in that two strain gages (23, 24) separated by an insulating film (25) are stacked in such a way as to be electrically connected with one another at one end of the stack (26), and that at the opposite end of the stack, an electrical contact (22) is provided at each of the strain gages (23, 24).

4. A strain transducer as claimed in any one of claims 1 to 3, characterized in that an electric conductor (35) separated from the strain gage (33) by an insulating film (34) is disposed parallel to the preferred direction of magnetization, and that an alternating voltage of frequency $\nu$ is applied to the electric conductor (35), where 1 Hz$<\nu>$100 MHz.

5. A strain transducer as claimed in claim 1, characterized in that the strain transducer, making use of the planar Hall effect, is designed as a thin film (43, 53) whose area has two approximately equal dimensions defining, e.g., a circle or a square, and that the preferred direction (L.R.) and the direction of strain ($\sigma$) preferably form an angle of 45°.

6. A strain transducer as claimed in claim 1, 2, 3 or 5, characterized in that it is enclosed by a flat coil whose windings are parallel to the preferred direction of magnetization in the non-strained state, and that an alternating voltage of frequency $\nu$ is applied to the coil, where 1 Hz $< \nu <$ 100 MHz.

7. A strain transducer as claimed in any one of claims 1 to 6, characterized in that the material is a transition metal of the iron group.

8. A strain transducer as claimed in any one of claims 1 to 7, characterized in that the material is an alloy based on transition metals of the iron group.

9. A strain transducer as claimed in any one of claims 1 to 8, characterized in that the material is an amorphous metal.

10. A strain transducer as claimed in any one of claims 1 to 9, characterized in that the amorphous metal contains metalloids (B, C, Si, Ge, P).

11. A strain transducer as claimed in any one of claims 1 to 10, characterized in that the amorphous metal contains zirconium, hafnium and/or niobium.

12. A strain transducer as claimed in any one of claims 1 to 11, characterized in that the amorphous metal is an alloy $Ni_x Fe_{(100 - x)}$, where $65\leq x \leq 80$ or $82\leq x \leq 90$ atom%.

13. A strain transducer as claimed in any one of claims 1 to 12, characterized in that the amorphous metal is $Fe_zB_{(100-z)}$, where $60 \leq z \leq 90$ atom%.

14. A strain transducer as claimed in any one of claims 1 to 13, characterized in that the thin film has a thickness ranging from 10 nm to 100 nm.

## Revendications

1. Capteur extensométrique qui comporte une couche mince (13, 23, 24, 33, 43, 53) constituée d'un matériau ferromagnétique magnétostrictif rapporté sur un substrat ou une membrane et dont la magnétisation varie du fait des propriétés magnétostrictives du matériau par suite d'une variation de longueur, caractérisé en ce que:

- la couche mince (13, 23, 24, 33, 43, 53) est anisotrope du point de vue magnétique,
- l'anisotropie magnétique présente une orientation préférentielle (L.R.) à laquelle la magnétisation est parallèle à l'état relaxé et qui fait tourner la direction de la magnétisation, lors d'un changement de longueur dans le plan de la couche mince (13, 23, 24, 33, 43, 53), et
- et en ce que sont rapportés au moins deux contacts électriques (12, 22, 32, 44, 45, 46, 47, 48, 54, 55, 56, 57) reliés à la couche mince (13, 23, 24, 33, 43, 53), lesquels contacts sont avantageusement disposés sur des faces opposées de la couche mince (13, 23, 24, 33, 43, 53) pour mesurer une valeur de tension qui apparaît du fait de l'effet galvanomagnétique.

2. Capteur extensométrique selon la revendication 1, caractérisé en ce que le capteur extensométrique est réalisé en utilisant la magnétorésistance sous forme d'une bande de mesure extensométrique et en ce que l'axe longitudinal de la bande de mesure extensométrique ainsi que l'orientation préférentielle (L.R.) sont dirigés soit parallèlement, soit orthogonalement l'un par rapport à l'autre.

3. Capteur extensométrique selon la revendication 2, caractérisé en ce que deux bandes de mesure extensométrique (23, 24) sont empilées l'une sur l'autre et séparées par une couche isolante (25), en ce que les bandes de mesure extensométrique (23, 24) sont reliées en connexion électrique directe à une extrémité de l'empilement (26) et en ce qu'à l'extrémité opposée de l'empilement, un contact électrique (22) est prévu chaque fois sur les bandes de mesure extensométrique (23, 24).

4. Capteur extensométrique selon l'une des revendications 1 à 3, caractérisé en ce qu'un conducteur électrique (35), séparé de la bande de mesure extensométrique (33) par une couche isolante (34), est disposé parallèlement à la direction d'orientation magnétique préférentielle, et en ce qu'on applique au conducteur électrique (35) une tension alternative à la fréquence $\nu$ où 1 Hz < $\nu$ < 1 000 Hz.

5. Capteur extensométrique selon la revendication 1, caractérisé en ce que le capteur extensométrique est réalisé en utilisant l'effet Hall dans un plan en guise de couche mince (43, 53) dont la surface présente deux dimensions d'empreinte pratiquement égales, telles que par exemple un cercle ou un carré, et en ce que l'orientation préférentielle (L.R.) et la direction d'extension ($\sigma$) font entre elles un angle qui est de préférence de 45°.

6. Capteur extensométrique selon l'une des revendications 1, 2, 3 ou 5, caractérisé en ce qu'il est entouré d'une bobine plate dont le bobinage est situé parallèlement à la direction magnétique préférentielle à l'état relaxé et en ce que l'on applique à la bobine une tension alternative à la fréquence $\nu$ où 1 Hz < $\nu$ < 1 000 Hz.

7. Capteur extensométrique selon l'une des revendications 1 à 6, caractérisé en ce que le matériau est un métal de transition du groupe du fer.

8. Capteur extensométrique selon l'une des revendications 1 à 7, caractérisé en ce que le matériau est un alliage qui est constitué des métaux de transition du groupe du fer.

9. Capteur extensométrique selon l'une des revendications 1 à 8, caractérisé en ce que le matériau est un métal amorphe.

10. Capteur extensométrique selon l'une des revendications 1 à 9, caractérisé en ce que le métal amorphe contient un métalloïde (B, C, Si, Ge, P).

11. Capteur extensométrique selon l'une des revendications 1 à 10, caractérisé en ce que le métal amorphe contient du zirconium, de l'hafnium et/ou du niobium.

12. Capteur extensométrique selon l'une des revendications 1 à 11, caractérisé en ce que le métal amorphe consiste en un alliage: $Ni_xFe_{(100-x)}$ avec 65 $\leq$ x $\leq$ 80 exprimés en pourcentage atomique et 82 $\leq$ x $\leq$ 90 exprimés en même pourcentage.

13. Capteur extensométrique selon l'une des revendications 1 à 12, caractérisé en ce le métal amorphe consiste en $Fe_zB_{(100-z)}$ avec la relation 60 $\leq$ z $\leq$ 90 en pourcentage atomique.

14. Capteur extensométrique selon l'une des revendications 1 à 13, caractérisé en ce que la couche mince présente une épaisseur de 10 à 100 nm.

Fig.1a

Fig.1b

Fig.2a

Fig.2b

Fig.3a

Fig.3b

Fig.4

Fig.5

Fig.6

Fig.7